# EUROPÄISCHE PATENTSCHRIFT

(11) **EP 0 897 496 B1**
(45) Veröffentlichungstag und Bekanntmachung des Hinweises auf die Patenterteilung: **29.12.1999**
(21) Anmeldenummer: 97921856.7
(22) Anmeldetag: 07.05.1997
(51) Int. Cl.: F16H 61/02

(54) **VERFAHREN ZUR BEWERTUNG EINER KURVENFAHRT BEI EINEM AUTOMATGETRIEBE**
PROCESS TO EVALUATE CORNERING FOR AN AUTOMATIC GEARBOX
PROCEDE D'EVALUATION DE LA NEGOCIATION D'UNE COURBE POUR UNE BOITE AUTOMATIQUE

(30) Priorität: 10.05.1996 DE 19618805
(43) Veröffentlichungstag der Anmeldung: 24.02.1999
(73) Patentinhaber: ZF FRIEDRICHSHAFEN Aktiengesellschaft, 88038 Friedrichshafen (DE); ROBERT BOSCH GMBH, 70442 Stuttgart (DE)
(72) Erfinder: HENNEKEN, Markus, D-88079 Kressbronn (DE); SCHMID, Wolfgang, D-88085 Langenargen (DE); POLJANSEK, Marko, D-72768 Reutlingen (DE); O'CONNOR, Gary, Reddich B97 5AY (GB)
(86) Internationale Anmeldenummer: EP9702318
(87) Internationale Veröffentlichungsnummer: WO9743568

(56) Entgegenhaltungen:
- US-A- 4 679 145
- US-A- 5 025 684
- US-A- 5 157 609
- US-A- 5 235 876

## Beschreibung

Die Erfindung betrifft ein Verfahren zur Bewertung einer Kurvenfahrt bei dem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes.

Aus der Praxis sind für elektro-hydraulisch gesteuerte Pkw-Automatgetriebe sogenannte "intelligente" Schaltprogramme bekannt.

Ein derartiges intelligentes Schaltprogramm ist beispielsweise in der DE-OS 39 22 051 beschrieben, wobei unter "intelligent" verstanden wird, daß der Fahrer eines Fahrzeuges keinen Wählknopf zur Einstellung eines bestimmten Schaltbereiches, wie z. B. für sportliche Fahrt oder ökonomische Fahrt, betätigen muß, da ein elektronisches Getriebesteuergerät aufgrund von Eingangsgrößen auf das Verhalten des Fahrers und damit des Fahrertyps schließt. Als Eingangsgrößen dienen hierbei beispielsweise das Signal einer Drosselklappe, die Drehzahl einer Brennkraftmaschine und die aus den Raddrehzahlen ermittelte Längs- und Querbeschleunigung. Gemäß dem Stand der Technik wird aus den Eingangsgrößen eine Fahraktivität bzw. ein Fahrertyp ermittelt. Aufgrund des Fahrertyps wird dann eine entsprechende Schaltkennlinie aus einer Mehrzahl von Schaltkennlinien ausgewählt. So wird beispielsweise für einen ruhigen Fahrertyp eine Schaltlinie mit niederen Schaltpunkten und für einen sportlichen Fahrertyp eine Schaltkennlinie mit hohen Schaltpunkten ausgewählt.

Da das Fahrverhalten eines Fahrers in verschiedenen Fahrsituationen unterschiedlich sein kann, würde z. B. ein ansonsten sportlicher Fahrer, der jedoch in Kurven eine langsamere Fahrt bevorzugt, eine generelle Einstufung seines Fahrverhaltens als sportlich in dieser Fahrsituation als störend empfinden. Das Schaltprogramm muß daher flexibel auf verschiedene Fahrsituationen reagieren können.

Aus der DE-PS 41 20 603 ist ein Verfahren bezüglich einer Kurvenfahrt bekannt, bei dem eine Hochschaltung nur dann zugelassen wird, wenn die Querbeschleunigung unterhalb eines Grenzwertes liegt.

Dieses aus dem Stand der Technik bekannte Verfahren weist somit den Nachteil auf, daß bei Kurvenfahrten mit einer hohen Querbeschleunigung zwar eine Schaltung unterbunden wird, aber die Fahraktivität bzw. der Fahrertyp nicht bewertet wird.

Es ist daher Aufgabe der vorliegenden Erfindung, ein Verfahren bereit zu stellen, durch welches die Bewertung eines Fahrertyps auch während einer Kurvenfahrt erfolgt.

Diese Aufgabe wird ausgehend von dem Oberbegriff des Anspruches 1 durch die im kennzeichnenden Teil des Anspruches 1 aufgeführten Verfahrensschritte gelöst.

Das erfindungsgemäße Verfahren weist den Vorteil auf, daß es auf einfache Art und Weise auch während einer Kurvenfahrt die Bewertung eines Fahrertyps ermöglicht.

Des weiteren ist bei dem Verfahren gemäß der Erfindung von Vorteil, daß der bei dem Verfahren herangezogene Fahrertyp-Istwert immer auf dem aktuell letzten Stand gehalten wird.

Weitere Vorteile der Erfindung ergeben sich aus den Unteransprüchen und der nachfolgenden, auf die prinzipmäßige Zeichnung Bezug nehmenden Beschreibung der Erfindung. Es zeigt:
- Fig. 1: ein stark schematisiertes Systemschaubild eines Automatikgetriebes;
- Fig. 2: einen Programmablaufplan zur Bewertung einer Kurvenfahrt;
- Fig. 3: ein Kennfeld zur Ermittlung eines Inkrementes (INKR) und
- Fig. 4: eine schematische Darstellung eines Zählers.

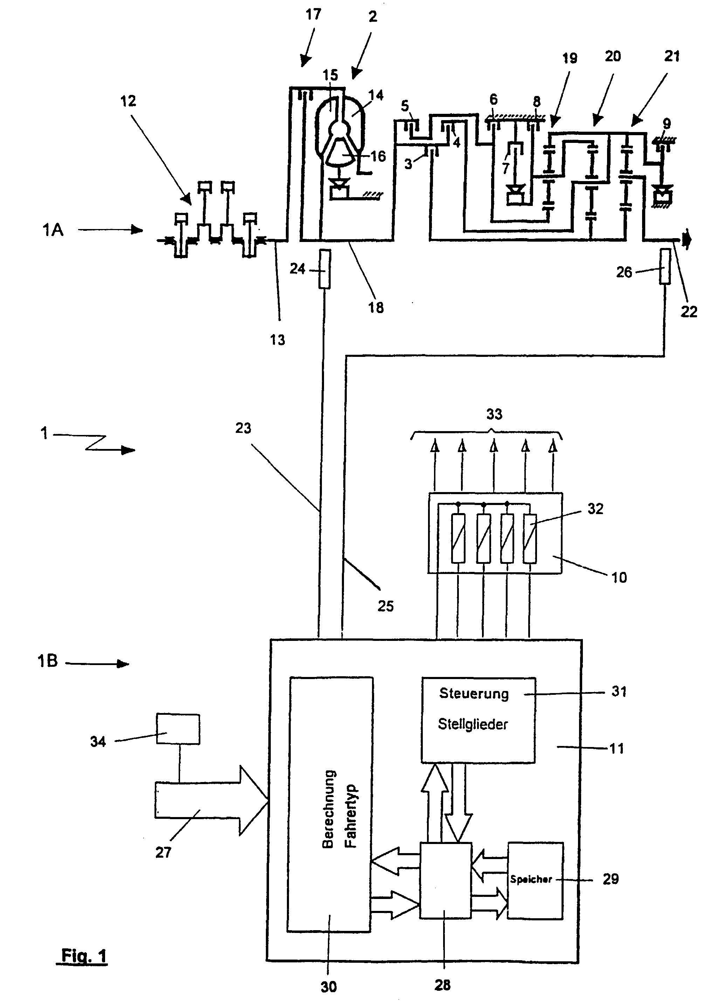

Bezug nehmend auf Fig. 1 ist ein stark schematisiertes Systemschaubild eines Automatgetriebes 1 dargestellt. Das Automatgetriebe 1 besteht aus einem mechanischen Teil 1A mit einem hydrodynamischen Wandler 2 und als Kupplungen bzw. Bremsen ausgebildeten Schaltelementen 3 bis 9 und aus einem Steuerungsteil 1B mit einem hydraulischen Steuergerät 10 und einem elektronischen Steuergerät 11. Das Automatgetriebe 1 wird von einer Antriebseinheit 12, welche zweckmäßiger Weise als Brennkraftmaschine ausgebildet ist, über eine Antriebswelle 13 angetrieben. Die Antriebswelle 13 ist mit einem Pumpenrad 14 des hydrodynamischen Wandlers 2, welcher des weiteren ein Turbinenrad 15 und ein Leitrad 16 aufweist, drehfest verbunden. Parallel zu dem hydrodynamischen Wandler 2 ist eine Wandlerkupplung 17 angeordnet. Die Wandlerkupplung 17 und das Turbinenrad 15 führen auf eine Turbinenwelle 18, wobei die Turbinenwelle 18 bei betätigter Wandlerkupplung 17 die gleiche Drehzahl wie die Antriebswelle 13 aufweist. Neben dem hydrodynamischen Wandler 2 und den Kupplungen bzw. Bremsen 3 bis 9 weist der mechanische Teil 1A des Automatgetriebes 1 zwei nicht näher bezeichnete Freiläufe und drei hintereinander angeordnete Planetenradsätze 19, 20 und 21 auf. Als Abtrieb ist bei dem Automatgetriebe 1 eine Getriebeausgangswelle 22 ausgebildet, welche auf ein nicht dargestelltes Differential führt, das über zwei Achshalbwellen - ebenfalls nicht dargestellte - Antriebsräder eines Fahrzeugs antreibt. Die Auswahl einer Gangstufe erfolgt über eine entsprechende Kupplungs-/Brems-Kombination. Da die beschriebenen Elemente des Automatgetriebes 1 für das weitere Verständnis der Erfindung nicht weiter von Bedeutung sind, wird an dieser Stelle nicht näher darauf eingegangen.

Von dem mechanischen Teil 1A des Automatgetriebes 1 zu dem elektronischen Steuergerät 11 führt eine Leitung 23 zur Übertragung eines Turbinendrehzahl-Signales, welches von einer Meßeinrichtung 24 an der Turbinenwelle 18 erzeugt wird, und eine Leitung 25 zur Übertragung eines Getriebeausgangsdrehzahl-Signales, das von einer Meßeinrichtung 26 an der Getriebeausgangswelle 22 erzeugt wird. Neben dem Getriebeausgangsdrehzahl-Signal und dem Turbinendrehzahl-Signal werden von einem die Brennkraftmaschine 12 steuernden Motorsteuergerät 27, welches in der Fig. 1 symbolhaft angedeutet ist, weitere Eingangsgrößen wie z. B. das Signal einer Drosselklappe, das Signal eines von der Brennkraftmaschine 12 abgegebenen Momentes M_M die Drehzahl n_M der Brennkraftmaschine 12, eine Temperatur des Motors und des Hydraulikfluids des Automatgetriebes 1 sowie Raddrehzahlen n_Rad an das elektronische Steuergerät 11 übermittelt. In Abhängigkeit dieser Eingangsgrößen wählt das elektronische Steuergerät 11 über das hydraulische Steuergerät 10 eine entsprechende Gangstufe aus.

Das elektronische Steuergerät 11, welches in der Fig. 1 äußerst schematisiert dargestellt ist, weist hierzu einen Micro-Controller 28, eine Speichereinrichtung 29, eine Berechnungseinheit 30 zur Ermittlung des Fahrertyps und eine Steuerungseinrichtung 31 auf. Dabei sind in der Speichereinrichtung 29, welche zweckmäßigerweise als EProm, EEProm oder als gepufferter RAM ausgeführt ist, die getrieberelevanten Daten, zu denen beispielsweise Programme und Daten sowie Diagnosedaten zählen, abgelegt. Die Steuerungseinrichtung 31 dient zur Ansteuerung von sich in dem hydraulischen Steuergerät 10 befindlichen Stellgliedern 32, welche zur Druckbeaufschlagung der Kupplungen bzw. Bremsen 3 bis 9 vorgesehen sind, wie durch die Pfeile 33 symbolhaft in Fig. 1 angedeutet ist.

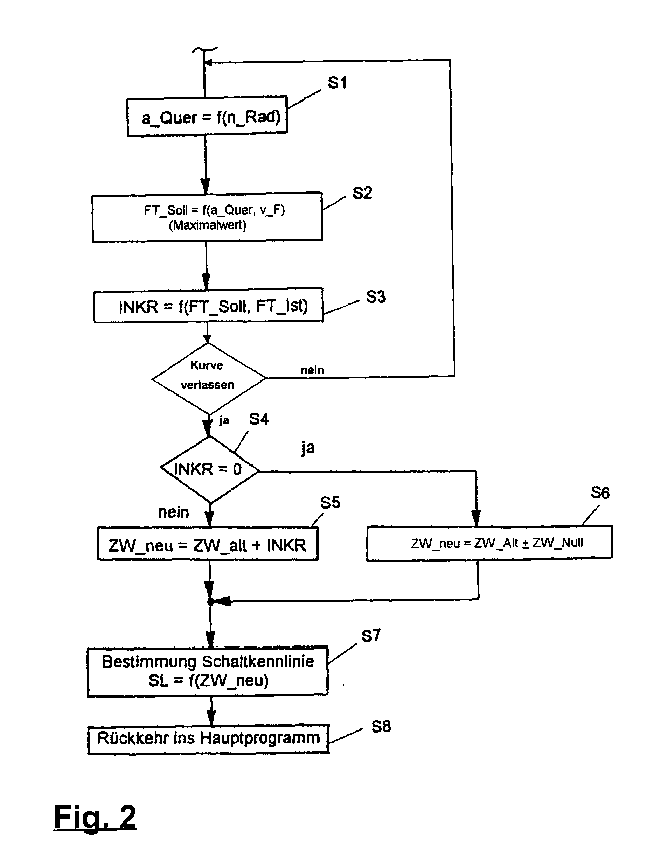

Bezug nehmend auf Fig. 2 ist ein Programmablaufplan für ein Unterprogramm zur Bewertung einer Kurvenfahrt dargestellt. Zu Beginn wird eine von einer Meßeinrichtung 34 ermittelte Raddrehzahl n_Rad an eine erste Verarbeitungsfunktion S1 der Berechnungseinheit 30 zur Ermittlung eines Fahrertyps ausgegeben. Die Verarbeitungsfunktion S1 liefert durch eine Berechnung aus den Raddrehzahlen n_Rad eine Querbeschleunigung a_Quer des Fahrzeuges. Die somit ermittelte Querbeschleunigung a_Quer wird von der Verarbeitungsfunktion S1 an eine Verarbeitungsfunktion S2 weitergeleitet, in der aus der Fahrzeugquerbeschleunigung a_Quer und einer Fahrzeuggeschwindigkeit v_F ein Fahrertyp-Sollwert FT_Soll bestimmt wird. Die Fahrzeuggeschwindigkeit v_F wird dabei aus einer an der Antriebswelle 22 des Automatgetriebes 1 gemessenen Getriebeausgangsdrehzahl n_AB von der Berechnungseinheit 30 ermittelt. In einer nachfolgenden Verarbeitungsfunktion S3 wird durch einen Vergleich des Fahrertyp-Sollwertes FT_Soll mit einem Fahrertyp-Istwert FT_Ist ein Inkrement INKR bestimmt.

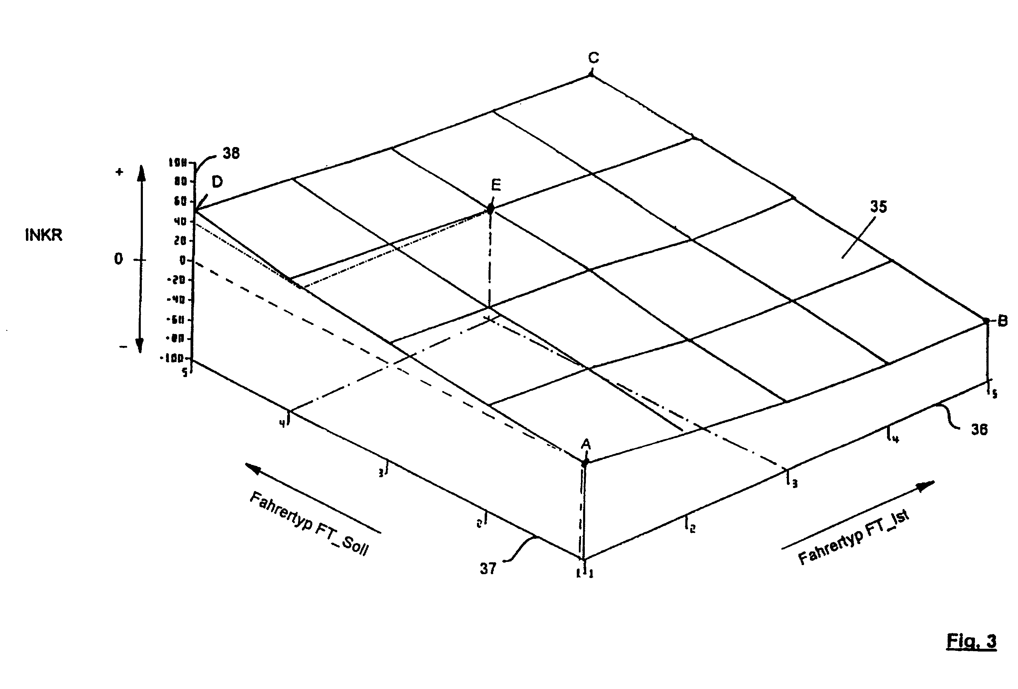

Bezug nehmend auf Fig. 3 ist ein vorgegebenes Kennfeld 35 dargestellt, welches die Abhängigkeit zwischen dem Fahrertyp-Sollwert FT_Soll, dem Fahrertyp-Istwert FT_Ist und dem Inkrement INKR bestimmt, und zur Ermittlung des Inkrementes INKR in der Verarbeitungsfunktion S3 dient. Dabei ist der Fahrertyp-Istwert FT_Ist auf einer ersten Achse 36, der Fahrertyp-Sollwert FT_Soll auf einer zweiten Achse 37 und das Inkrement INKR auf einer dritten Achse 38 aufgetragen. In dem Kennfeld 35 liegt eine Fläche mit den Endpunkten A, B, C und D.

Zur Ermittlung des Inkrementes INKR wird zunächst der Fahrertyp-Sollwert FT_Soll und der Fahrertyp-Istwert FT_Ist bestimmt. Aus dem Schnittpunkt dieser beiden Werte in dem Kennfeld 35 ergibt sich das zugehörige Inkrement INKR an der Achse 38.

In Fig. 3 sind zwei Beispiele zur Ermittlung eines Inkrementes ersichtlich, wobei das erste Beispiel durch gestrichelte Linien und das zweite Beispiel durch strichpunktierte Linien dargestellt ist.

In dem ersten Beispiel wird der Fahrertyp-Sollwert FT_Soll mit dem Wert eins und der Fahrertyp-Istwert FT_Ist ebenfalls mit dem Wert eins bestimmt. Als Schnittpunkt ergibt sich der Eckpunkt A, dem der Inkrementwert Null zugeordnet ist.

In dem zweiten Beispiel wird ein Fahrertyp-Sollwert FT_Soll von vier und ein Fahrertyp-Istwert FT_Ist von drei aufgetragen. Daraus ergibt sich in dem Kennfeld 35 ein Schnittpunkt E, dem auf der Achse 38 der Inkrementwert 40 zugeordnet ist.

In einer Unterscheidungsfunktion S4, welche in Fig. 2 ersichtlich ist, wird nun geprüft, ob das Inkrement gleich dem Nullwert ist.

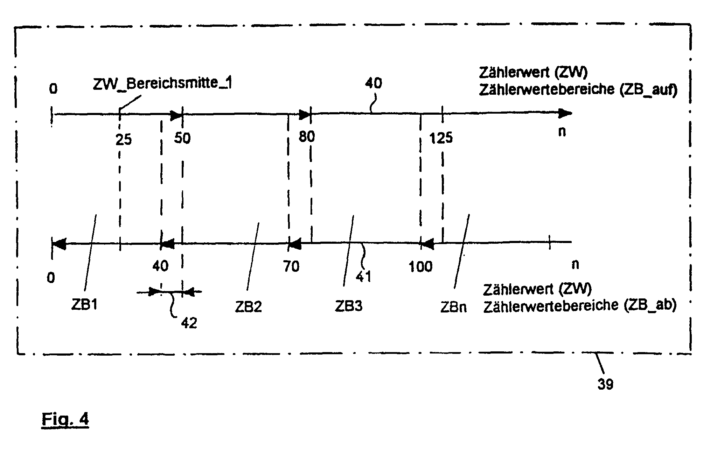

Entsprechend dem Ergebnis, das die Unterscheidungsfunktion S4 liefert, wird ein in Fig. 4 dargestellter Zähler 39 mit Zählerwerten ZW, die in definierte, einem bestimmten Fahrertyp bzw. Kurvenfahrstil zugeordnete Zählerwertbereiche ZB unterteilt sind, eingestellt. Der Zähler 39 weist einen Hochzähler 40 und einen Runterzähler 41 auf, welche symbolhaft als parallel zueinander verlaufende Zahlenstrahle dargestellt sind. Der Hochzähler 40 beginnt mit dem Wert Null und steigt kontinuierlich an bis zu einem Zählerwert ZW von n, und der in entgegengesetzte Richtung verlaufende Runterzähler 41 beginnt mit dem Zählerwert von n und steigt kontinuierlich ab bis zu dem Zählerwert Null. Die Intervalle zwischen den Zählerwerten ZW sind bei dem Hochzähler 40 und dem Runterzähler 41 identisch, so daß sich die Zählerwerte des Hochzählers 40 und des Runterzählers 41 überdecken. Die Zählerwerte sind in n-Zählerwertebereiche aufgeteilt, wobei die Intervalle eines Zählerwertebereiches ZB_auf bei dem Hochzähler 40 und die eines Zählerwertebereiches ZB_ab bei dem Runterzähler 41 übereinstimmen. Die Zählerwertebereiche ZB_auf und ZB_ab sind jedoch zueinander um eine bestimmte Anzahl an Zählerwerten ZW, in dem Beispiel nach Fig. 4 um zehn Zählerwerte, versetzt. Der erste Zählerwertebereich ZB_auf_1 des Hochzählers 40 beginnt gemäß Fig. 4 mit dem Zählerstand Null und endet bei dem Zählerwert 50. Der zweite Zählerwertebereich ZB_auf_2 des Hochzählers 40 beginnt bei dem Zählerwert 50 und endet bei dem Zählerwert 80. Dagegen beginnt in dem vorliegenden Beispiel der Zählerwertebereich ZB_ab_1 des Runterzählers 41 mit dem Zählerwert 40 und endet bei dem Zählerstand Null. Der zweite Zählerwertebereich ZB_ab_2 des Runterzählers 41 beginnt bei dem Zählerwert 70 und endet bei dem Zählerwert 40. Die Zählerwertebereiche ZB_auf, ZB_ab stellen Sportlichkeitsstufen eines Fahrertyps bzw. Fahrverhaltens dar, wobei mit aufsteigender Zahl des Zählerwertebereiches ZB_auf bzw. ZB_ab die Sportlichkeit der Bewegung eines Fahrzeugs höher eingeschätzt wird. Zwischen zwei korrelierenden Zählerwertebereichen ZB_auf_n und ZB_ab_n ergeben sich in den Grenzbereichen Überschneidungszonen 42 aufgrund der Versetzung der Zählerwertebereiche ZB_auf und ZB_ab zueinander. Die Breite einer Überschneidungszone 42 entspricht dem Zählerwerte-Intervall, um das die Zählerwertebereiche zueinander versetzt sind, d. h. die Überschneidungszone 42 in dem Beispiel nach Fig. 4 weist eine Breite von zehn Zählerwerten auf. Die Überschneidungszonen 42 stellen dabei Beruhigungszonen dar.

Liefert die Unterscheidungsfunktion S4 nach Fig. 2 das Ergebnis, daß das Inkrement INKR gleich Null ist, d. h., daß der Fahrertyp-Sollwert FT_Soll und der Fahrertyp-Istwert FT_Ist identisch sind, so wird in einer Verarbeitungsfunktion S11 der neue Zählerwert gemäß der Beziehung ZW_Neu = ZW_Alt +/- ZW_Null bestimmt. Dies bedeutet, daß der Zähler ZW_Neu auf die Bereichsmitte geführt wird, wobei sich das Vorzeichen des Terms ZW_Null daraus ergibt, ob der alte Zählerwert ZW_Alt größer oder kleiner der Bereichsmitte ist.

In Fig. 4 ist beispielhaft hierfür ein Zählerwert ZW_Bereichsmitte des Zählerwertbereiches ZB_auf_1 bzw. ZB_ab_1 eingezeichnet, dessen Zählerwert 25 beträgt.

Gibt die Unterscheidungsfunktion S4 das Ergebnis aus, daß das Inkrement größer oder kleiner Null ist, d. h., daß der Fahrertyp-Sollwert FT_Soll und Fahrertyp-Istwert FT_Ist voneinander abweichen, wird in einer Verarbeitungsfunktion S5 ein Summand aus einem vorhergehenden Zählerwert ZW_Alt und dem Inkrement INKR als neuer Zählerwert ZW_Neu bestimmt und der Zähler 39 dementsprechend eingestellt.

Im zweiten in Fig. 3 dargestellten Beispiel beträgt der Inkrementwert 40, d. h. der Zählerwert wird um den Betrag 40 erhöht.

Der Zähler 39 wird somit in Abhängigkeit der Fahrsituation direkt ohne Filterung in- bzw. dekrementiert oder bei Übereinstimmung von Fahrertyp-Istwert FT_Ist und Fahrertyp-Sollwert FT_Soll gemäß der Funktion auf ZW_Neu = ZW_Alt +/- ZW_Null gesetzt.

In einer Verarbeitungsfunktion S7 wird dem neuen Zählerwert ZW_Neu eine Schaltkennlinie SL aus einer Vielzahl von Schaltkennlinien, die jeweils für einen bestimmten Fahrertyp bzw. Kurvenfahrstil geeignet sind, zugeordnet. Diese Funktion wird jedoch erst dann ausgeführt, wenn die Kurve durchfahren wurde, d. h. wenn die Fahrzeug-Querbeschleunigung kleiner einem Grenzwert ist (a_Quer < GW).

Somit erfolgt über das Inkrement INKR die Auswahl einer dem Fahrertyp entsprechenden Schaltkennlinie mit hohen oder tiefen Schaltpunkten.

Über eine nachfolgende Verarbeitungsfunktion S8 erfolgt anschließend die Rückkehr ins Hauptprogramm.

### Bezugszeichen

- 1: Automatgetriebe
- 1A: mechanischer Teil des Automatgetriebes
- 1B: Steuerungsteil des Automatgetriebes
- 2: hydrodynamischer Wandler
- 3: Schaltelement
- 4: Schaltelement
- 5: Schaltelement
- 6: Schaltelement
- 7: Schaltelement
- 8: Schaltelement
- 9: Schaltelement
- 10: hydraulisches Getriebesteuergerät
- 11: elektronisches Getriebesteuergerät
- 12: Antriebseinheit
- 13: Antriebswelle
- 14: Pumpenrad
- 15: Turbinenrad
- 16: Leitrad
- 17: Wandlerkupplung
- 18: Turbinenwelle
- 19: erster Planetenradsatz
- 20: zweiter Planetenradsatz
- 21: dritter Planetenradsatz
- 22: Getriebeausgangswelle
- 23: Turbinendrehzahl-Signal-Leitung
- 24: Turbinendrehzahl-Meßeinrichtung
- 25: Getriebeausgangsdrehzahl-Signal-Leitung
- 26: Getriebeausgangsdrehzahl-Meßeinrichtung
- 27: Motorsteuergerät
- 28: Micro-Controller
- 29: Speicher
- 30: Berechnungseinheit
- 31: Steuerungseinrichtung
- 32: Stellglied
- 33: Druckbeaufschlagungs-Pfeil
- 34: Raddrehzahl-Meßeinrichtung
- 35: Kennfeld
- 36: erste Achse des Kennfeldes
- 37: zweite Achse des Kennfeldes
- 38: dritte Achse des Kennfeldes
- 39: Zähler
- 40: Zahlenstrahl Hochzähler
- 41: Zahlenstrahl Runterzähler
- 42: Überschneidungszone

## Patentansprüche

1. Verfahren zur Bewertung einer Kurvenfahrt bei einem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes, **gekennzeichnet** durch die Verfahrensschritte:
1. aus von einer Meßeinrichtung (34) an Rädern des Fahrzeuges gemessenen Raddrehzahlen (n_Rad) wird in einer ersten Verarbeitungsfunktion (S1) von der Berechnungseinheit (30) eine Querbeschleunigung (a_Quer) des Fahrzeuges ermittelt,
2. in einer weiteren Verarbeitungsfunktion (S2) wird aus der Fahrzeugquerbeschleunigung (a_Quer) und einer Fahrzeuggeschwindigkeit (v_F) ein Fahrertyp-Sollwert (FT_Soll) bestimmt,
3. aus einem Inkrement (INKR) zwischen dem Fahrertyp-Sollwert (FT_Soll) und einem Fahrertyp-Istwert (FT_Ist) wird eine Schaltkennlinie (SL) aus mehreren jeweils einem bestimmten Fahrertyp bzw. Kurvenfahrstil zugeordneten Schaltkennlinien ermittelt.

2. Verfahren nach Anspruch 1, dadurch **gekennzeichnet** g e k e n nz e i c h n e t , daß die Fahrzeuggeschwindigkeit (v_F) in der Verarbeitungsfunktion (S2) aus einer an einer Getriebeausgangswelle (22) gemessenen Getriebeausgangsdrehzahl (n_AB) von der Berechnungseinheit (30) ermittelt wird.

3. Verfahren nach Anspruche 1 oder 2, dadurch **gekennzeichnet** , daß das Inkrement (INKR) in einer Verarbeitungsfunktion (S3) aus einem vorgegebenen Kennfeld (35), welches die Abhängigkeit zwischen dem Fahrertyp-Sollwert (FT_Soll), dem Fahrertyp-Istwert (FT_Ist) und dem Inkrement (INKR) bestimmt, ermittelt wird.

4. Verfahren nach einem der Ansprüche 1 bis 3, dadurch **gekennzeichnet** , daß zur Ermittlung der Schaltkennlinie (SL) aus dem Inkrement (INKR)
1. das Inkrement (INKR) an eine Unterscheidungsfunktion (S4) ausgegeben wird, zur Feststellung, ob das Inkrement (INKR) gleich einem Nullwert ist und falls ja, ein Zähler (39) mit Zählerwerten (ZW), die in definierte, einem bestimmten Fahrertyp bzw. Kurvenfahrstil zugeordnete Zählerwertebereiche (ZB_auf, ZB_ab) unterteilt sind, derart eingestellt wird, daß als neuer Zählerwert (ZW_Neu) gemäß der Funktion ZW_Neu = ZW Alt +/- ZW_Null in einer Verarbeitungsfunktion (S11) bestimmt wird und falls das Inkrement (INKR) größer oder kleiner Null ist, in einer Verarbeitungsfunktion (S5) ein Summand aus einem vorhergehenden Zählerwert (ZW_Alt) und dem Inkrement (INKR) als neuer Zählerwert (ZW_Neu) bestimmt wird,
2. in einer Verarbeitungsfunktion (S7) wird dem neuen Zählerwert (ZW_Neu) eine Schaltkennlinie (SL) zugeordnet und eine Verarbeitungsfunktion (S8) zur Rückkehr in ein Hauptprogramm gestartet.

5. Verfahren nach Anspruch 4, dadurch **gekennzeichnet** , daß die Zählerwertebereiche (ZB_auf, ZB_ab) des Zählers (39) in ihren Grenzbereichen Überschneidungszonen (42) aufweisen.

## Claims

1. Process to evaluate cornering for an automatic gearbox of a vehicle by means of an electronic gearbox control mechanism with a calculation unit, a microcontroller, a storage device and a control device for actuating a hydraulic gearbox control mechanism, characterised by the process steps:
1. a transverse acceleration (a_Quer) of the vehicle is determined in a first processing function (S1) by the calculation unit (30) from wheel speeds (n_Rad) measured by a measuring device at wheels of the vehicle,
2. a theoretical driver-type value (FT_Soll) is determined in a further processing function (S2) from the vehicle acceleration (a_Quer) and a vehicle velocity (v_F),
3. a gear-change characteristic (SL) consisting of a plurality of gear-change characteristics, each associated with a certain driver-type or cornering style, is determined from an increment (INKR) between the theoretical driver-type value (FT_Soll) and an actual driver-type value (FT_Ist).

2. Process according to claim 1, characterised in that the vehicle velocity (v_F) is determined in the processing function (S2) by the calculation unit (30) from a gearbox output speed (n_AB) measured at a gearbox output shaft (22).

3. Process according to claim 1 or 2, characterised in that the increment (INKR) is determined in a processing function (S3) from a predetermined mapping (35), which determines the dependence between the theoretical driver-type value (FT_Soll), the actual driver-type value (FT_Ist) and the increment (INKR).

4. Process according to any one of claims 1 to 3, characterised in that, in order to determine the gear-change characteristic (SL) from the increment (INKR),
1. the increment (INKR) is delivered to a discriminating function (S4) to establish whether the increment (INKR) is equal to a zero value and, if so, a counter (39) with counter values (ZW), which are divided into defined counter value ranges (ZB_auf, ZB_ab), which are associated with a certain driver type or cornering style, is set such that (ZW_Neu) is determined as the new counter value according to the function ZW_Neu = ZW_Alt +/- ZW_Null in a processing function (S11), and if the increment (INKR) is greater than or equal to zero, an addend is determined in a processing function (S5) from the previous counter value (ZW_Alt) and the increment (INKR) as the new counter value (ZW-Neu),
2. a gear-change characteristic (SL) is associated with the new counter value (ZW-Neu) in a processing function (S7) and a processing function (S8) is started to return to a main program.

5. Process according to claim 4, characterised in that the counter value ranges (ZB_auf, ZB_ab) of the counter (39) comprise overlap zones (42) in their boundary regions.

## Revendications

1. Procédé d'évaluation de la négociation d'une courbe pour une boîte automatique d'un véhicule au moyen d'un appareil de commande électronique de la transmission comportant une unité de calcul, un micro-contrôleur, une mémoire et un dispositif de commande pour un appareil de commande hydraulique de la transmission, **caractérisé** par les étapes de procédé suivantes:
1. à partir des vitesses de rotation (n-Rad) mesurées par un dispositif de mesure (34) sur les roues du véhicule, est déterminée, dans une première fonction de traitement (S1) de l'unité de calcul (30), une accélération transversale (a_Quer) du véhicule,
2. dans une autre fonction de traitement (S2), une valeur de consigne du type de conducteur (FT_Soll) est déterminée à partir de l'accélération transversale du véhicule (a_Quer) et d'une vitesse du véhicule (v_F),
3. à partir d'un incrément (INKR) entre la valeur de consigne du type de conducteur (FT_Soll) et une valeur effective du type de conducteur (FT_Ist) est déterminée une courbe caractéristique des changements de vitesse (SL) à partir de plusieurs courbes caractéristiques affectées à un type de conducteur défini, respectivement à un style de conduite dans les virages.

2. Procédé selon la revendication 1, **caractérisé** en ce que la vitesse du véhicule (v_F) est déterminée par l'unité de calcul (30) dans la fonction de traitement (S2) à partir d'une vitesse de rotation de sortie de la boîte de vitesses (n_AB) mesurée sur un arbre de sortie (22) de la boîte.

3. Procédé selon les revendications 1 ou 2, **caractérisé** en ce que l'incrément (INKR) est déterminé dans une fonction de traitement (S3) à partir d'un diagramme caractéristique prédéfini (35), lequel détermine la relation entre la valeur de consigne du type de conducteur (FT_Soll), la valeur réelle du type de conducteur (FT_Ist) et l'incrément (INKR).

4. Procédé selon l'une des revendications 1 à 3, **caractérisé** en ce que pour déterminer la courbe caractéristique des changements de vitesse (SL) à partir de l'incrément (INKR) :
1. l'incrément (INKR) est transmis à une fonction de discrimination (S4) en vue de vérifier si l'incrément (INKR) est égal à une valeur nulle et, si oui, un compteur (39) avec des valeurs de compteur (ZW) réparties dans des zones de valeurs de compteur définies affectées à un type de conducteur spécifique, respectivement à un style de conduite dans les virages (ZB_auf, ZB_ab), est réglé de telle façon qu'une nouvelle valeur de compteur (ZW_Neu) est déterminée selon la fonction ZW_Neu = ZW_Alt +/- ZW_Null dans une fonction de traitement (S11), et
si l'incrément (INKR) est supérieur ou inférieur à zéro, un opérande d'une somme est déterminé dans une fonction de traitement (S5) à partir d'une valeur de compteur précédant (ZW_Alt) et l'incrément (INKR) comme nouvelle valeur de compteur (ZW_Neu),
2. dans une fonction de traitement (S7), une courbe caractéristique de changement de vitesse (SL) est affectée à la nouvelle valeur de compteur (ZW_Neu) et une fonction de traitement (S8) est démarrée pour le retour dans un programme principal.

5. Procédé selon la revendication 4, **caractérisé** en ce que les zones des valeurs de compteur (ZB_auf, ZB_ab) du compteur (39) présentent des intersections (42) dans leurs zones limites.
